Europäisches Patentamt

European Patent Office

Office européen des brevets

(11) Publication number: **0 114 796**
**B1**

## (12) EUROPEAN PATENT SPECIFICATION

(45) Date of publication of patent specification: **13.05.87**

(21) Application number: **84850011.2**

(22) Date of filing: **12.01.84**

(51) Int. Cl.⁴: **F 41 H 3/02**

(54) **Perforated camouflage material.**

(30) Priority: **14.01.83 SE 8300175**

(43) Date of publication of application:
**01.08.84 Bulletin 84/31**

(45) Publication of the grant of the patent:
**13.05.87 Bulletin 87/20**

(84) Designated Contracting States:
**AT DE NL**

(56) References cited:
**CH-A- 347 737**
**DE-B-1 236 980**
**DE-C- 708 656**
**FR-A-1 233 225**
**SE-A-75 051 805**

(73) Proprietor: **DIAB-BARRACUDA AB**
**S-59400 Gamleby (SE)**

(72) Inventor: **Karlsson, Lars**
**Nejlikevägen 10**
**S-59400 Gamleby (SE)**

(74) Representative: **Grennberg, Erik Bertil et al**
**H ALBIHNS PATENTBYRA AB Box 7664**
**S-103 94 Stockholm (SE)**

Courier Press, Leamington Spa, England.

## Description

The present invention relates to a camouflage material in the form of a camouflage-coloured sheet made from a strengthening layer and a layer of plastics material laminated thereon, and which sheet is provided with perforated holes.

The sheet represents a tarpaulin-like product, preferably manufactured in the form of a web, and intended for coverage for the purpose of masking military equipment and the like. The products in question may have built-in weaves, but strengthening layers of non-woven type or plastics webs of other kinds may also be envisaged.

A hole-provided material of the type defined in the preamble of claim 1 is known from SE—A—7505180—5 and GB—A—1535260. A masking effect is obtained by a pattern of holes where the holes appear as black grid points, whereby different half-tone patterns and "shadow effects" are obtained which give good optical camouflage effect.

For the purpose of providing a camouflage intended to camouflage warm objects against infrared reconnaissance, a camouflage with patterned perforation of this type cannot be used. As a matter of fact, a hot engine or the like, covered by such material, will emit heat radiation through the holes. The coverage will be insufficient.

Infrared reconnaissance is performed with the aid of apparatus (detector matrices, scanning detectors and the like) having good sensitivity within any one of the wavelength bands 3—5 um and 8—14 um. In such reconnaissance, hot and cold parts are detected and a heat image is obtained. Dead nature already gives a pattern of warm and colder surfaces, and a thermal camouflage material should therefore present warm as well as cold surfaces.

One object of the invention is to achieve a varied temperature image with a camouflage-coloured sheet masking an object which is warm in relation to the surrounding average temperature. Another object is to achieve transparency in such a sheet so as to enable an observer inside the masking to observe the surroundings without being seen.

These and other objects are achieved by the invention in that in a camouflage material as recited in the introduction, the layer of plastics material has tensional stresses, that said holes consist of curved, unconnected slits cut through the sheet and forming tongues which, due to the action of the tensional stresses in said plastics material are curved outwards from the plane of the sheet towards the side facing away from the strengthening layer on which said plastics material is applied.

From FR—A—1 233 225, there is known a way of slitting a sheet by means of rows of bent cuts, where successive rows of horse-shoe formed cuts are turned in alternate directions and interpenetrate. When drawn out in a direction perpendicular to the rows, the sheet is transformed into a three-dimensional structure useful for camouflage by fixing to a net or the like. By itself, it will no longer fulfill a tarpaulin camouflage function against thermal reconnaissance.

It is also known per se to introduce stressing into camouflage webs by fixing the web to a set of stretched rubber bands or the like (DE—C—708 656) which when set free will turn the web into a three-dimensional, wavy structure, or to introduce thermoplastic threads in weaving, which can be made to shrink by successive heating (CH—A—347 737 and DE—B—1 236 980). None of those disclosures, however, provides for the cutting of holes in a web.

A suitable plastics material for the invention having internal stresses is polyethylene film (e.g. LDPE®, from which films are manufactured by blowing into thin tubes). During lamination under heat with a strengthening layer, e.g. a weave, the inner stresses in the film will be released and the film will tend to shrink, but cannot. When the unconnected slits are then cut, the shrinkage stresses thus formed in the tongues will be released making the tongues curve outwards, and this can even go so far that a part of the underside becomes visible in the forward direction of the sheet, which can give small patches of deviating colours.

It is suitable to distribute such slits in zones, so that zones with slits and zones without slits are alternatingly obtained. If a warm object is to the interior of such a sheet, a ventilation will occur which in itself is advantageous and which warms the sheet at the zones, and should there be any wind, the draught through the slits will cause heat transfer to these zones, while the temperature equilibrium in other zones is more determined by the radiation conditions of the surroundings.

The plastics layer may to advantage be provided with a thin layer of metal on the side facing inwards, which results in a certain amount of thermal reflection. It is also suitable to give the plastics layer a mat-treated surface, as it may otherwise be so glossy that the degree of specular reflection is thus high enough to be observable, giving an effect clearly distinguishing from the surrounding nature.

The tarpaulin-like sheet obtained can be used as a covering and masking sheet per se and can have various painted or printed patterns which are no part of the present invention, however.

A material with a high degree of coverage is obtained with the aid of the invention, and the perforated portions should preferably have a coverage degree of about 90%. The size of the perforations in normal "tarpaulin types" should not exceed about 15 mm, since the flaps obtained would otherwise be too sloppy and the inventive effect lost.

A particularly practical advantage of the invention is the absence of waste material. In normal hole punching there are obtained waste roundels of no value which are difficult to get rid of. In accordance with the invention the whole of the manufactured material is essentially used for the intended purpose.

The invention will now be described in more detail by means of a non-limiting embodiment. Fig. 1 illustrates a sheet suitable for the application of the invention. Fig. 2 illustrates an example of a zone with cut hole slits. Fig. 3A schematically illustrates a punch for stamping webs, Figs. 3B and 3C illustrate a suitable hollow punch. Fig. 4A illustrates a hole seen from above. Fig. 4B illustrates the same hole in cross section. Fig. 5 schematically illustrates a lamination process. Fig. 6 illustrates an example of a perforation pattern.

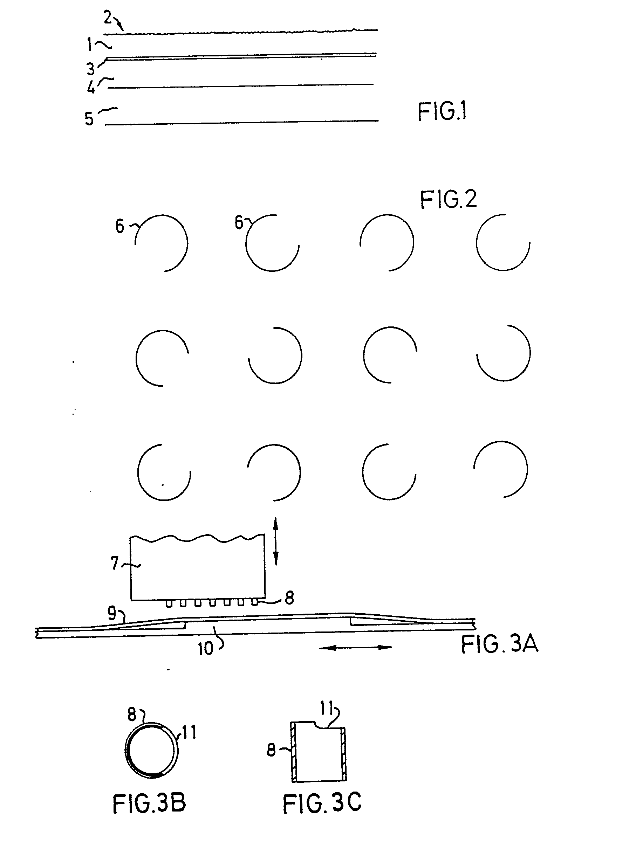

Fig. 1 illustrates a sheet of the kind suitable for applying the invention. A layer 1 of blown LDPE® containing green camouflage pigment is matted on one side 2, and the other, opposite side is provided with a vaporized thin metal deposit 3. The plastics layer is 40 µm (for clarity reasons the figure is not in scale). This plastics layer is heat-laminated with a fusible adhesion film 4 of 30 g/m² (XIRO type 240®) against a woven layer 5 of solid-drawn multifilament polyamide (16/16 threads/cm, with a weave of 235 dtex).

Fig. 2 illustrates the disposition of perforating slits 6 consisting of incomplete circles, and it will be seen that the missing portion of the circles points in different directions making the tongues thus formed pointing in different directions.

Fig. 3A illustrates a stamping apparatus 7 with a set of hollow punches 8. The stamping apparatus can be given reciprocating motion towards a table or a die 10. The die can be made to have depressed portions, so that the punches meeting the depressed portions do not operate against the web 9 laid over the die, which web can be of the type illustrated in Fig. 1. The punches 8, shown more closely in Fig. 3B, in cross section, and in Fig. 3C, from the cutting end, have ground-off edge portions 11.

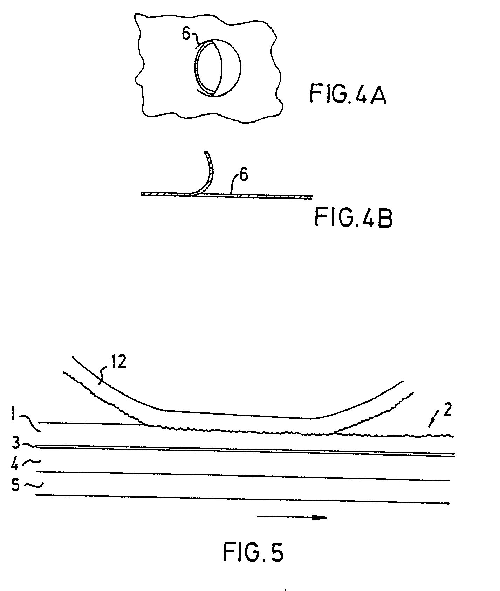

Due to the stresses in the plastics layer, the incomplete circular perforations will curve upwards, as shown in Figs. 4A and 4B.

Fig. 5 schematically illustrates a suitable manufacturing procedure for the web shown in Fig. 1. The layer 1 with its metallized layer is pulled from a roller not shown, the adhesive layer 4 from another roller not shown, and the woven layer 5 from a third storage roller not shown. The layer 1 initially has a glossy surface. In one or more heated roll nips a structural pattern sheet 12 is rolled under pressure and heat against the collected layer. The structural pattern sheet can be a viscose weave enamelled with an enamel-containing matting agent to give it a matted surface, which will be depicted or embossed as a surface structure during the laminating operation.

Since the polyethene layer has been manufactured under tension (the normal, known manufacturing process occurs by blowing to a thin tube which is slit up), there is latent tension in the material which is released at the heating process during lamination and gives a shrinkage effect.

A condition for the invention to function is that the material cut with "incomplete holes" includes a first layer of weave, for example, and a second layer in which a stress is built up so that this layer tends to shrink, but cannot do so before the perforations are made. Although this is preferably achieved by the described heat-lamination of a material with latent stresses, it will be appreciated that even a material in stretched condition can be applied to achieve the material thus pretensioned.

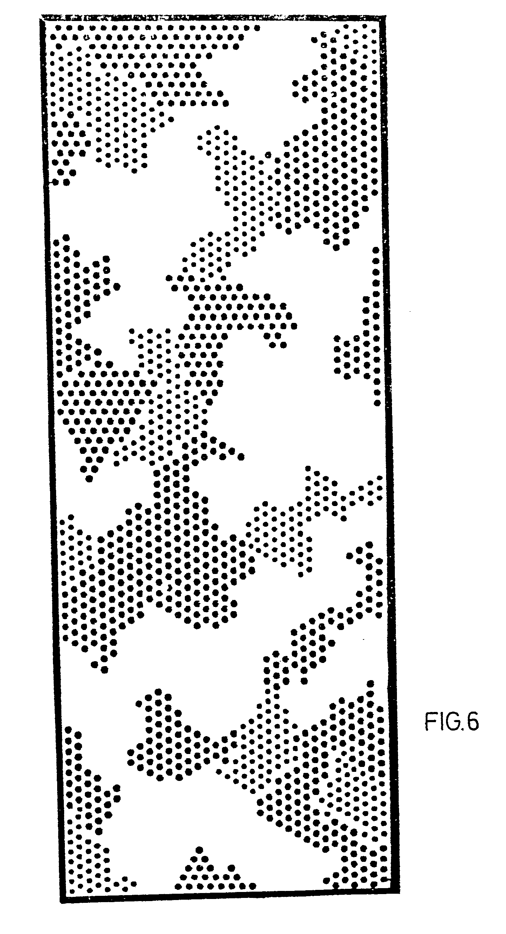

An example of a perforation disposition is illustrated in Fig. 6. For the sake of clarity the slits are shown as black patches, although in reality they will naturally correspond more to the shape illustrated in Fig. 4A. What is illustrated in Fig. 6 is a repeat length for a web having a width of 1 m. The repeat length is 4.5 m. It should be observed that in this case holes have been made in different zones, and that outside the zones the sheet is free from slits. It will also be seen that slits in two different sizes are present in the pattern, the richness of variation thus being improved. In actual fact, the slits are substantially smaller and more densely disposed. Their diameter is preferably about 15 mm.

The inventive slits provide good coverage against observation in spite of the slits giving a good ventilation effect in an oblique direction, since the gaps are very effective.

## Claims

1. A camouflage material in the form of a camouflage-coloured sheet made from a strengthening layer (5) and a layer (1) of plastics material laminated thereon, and which sheet is provided with perforated holes, characterized in that the layer of plastics material has tensional stresses, that said holes consist of unconnected, curved slits (6) cut through the sheet and forming tongues, which due to the action of the tensional stresses in said plastics material are curved outwards from the plane of the sheet towards the side facing away from the strengthening layer on which said plastics material is applied.

2. Perforated camouflage material as claimed in claim 1, characterized in that the strengthening layer (5) is a woven product.

3. Perforated camouflage material as claimed in claim 1 or 2, characterized in that the adhered layer (1) is a polyethylene film in which latent tension stresses are released during lamination under heat.

4. Perforated camouflage material as claimed in any one of the preceding claims, characterized in that the slits (6) are circular arcs with an angle exceeding 180° and falling below 270°.

5. Perforated camouflage material as claimed in any one of the preceding claims, characterized in that the slits (6) are made in zones where they are disposed according to a regular dot pattern, the material outside the zones being free from slits (6).

6. Perforated camouflage material as claimed in claim 5, characterized in that slits (6) of different sizes are made in different zones.

## Patentansprüche

1. Tarnmaterial in Form eines tarnfarbigen Blattmaterials aus einer Verstärkungslage (5) und einer mit dieser ein Laminat bildenden Lage (1) aus Kunststoff, wobei das Blattmaterial mit Durchbrechungen versehen ist, dadurch gekennzeichnet, daß die Lage aus Kunststoff Zugspannungen aufweist, daß die Durchbrechungen aus unverbundenen gekrümmten Schlitzen (6) bestehen, die durch das Blattmaterial geschnitten sind und Zungen bilden, welche unter der Wirkung der Zugspannungen im Kunststoff aus der Blattmaterialebene gegen jene Seite nach außen gewölbt sind, welche der den Kunststoff tragenden Verstärkungslage abgekehrt ist.

2. Durchbrochenes Tarnmaterial nach Anspruch 1, dadurch gekennzeichnet, daß die Verstärkungslage (5) ein gewebtes Produkt ist.

3. Durchbrochenes Tarnmaterial nach Anspruch 1 oder 2, dadurch gekennzeichnet, daß die anhaftende Lage (1) ein Polyäthylenfilm ist, in welchem während des Laminierens unter Wärme latente Zugspannungen freigesetzt werden.

4. Durchbrochenes Tarnmaterial nach einem der vorhergehenden Ansprüche, dadurch gekennzeichnet, daß die Schlitze (6) Kreisbögen sind, deren Winkel 180° überschreitet und 280° unterschreitet.

5. Durchbrochenes Tarnmaterial nach einem der vorhergehenden Ansprüche, dadurch gekennzeichnet, daß die Schlitze (6) in Zonen ausgebildet sind, in welchen die Schlitze nach einem regelmäßigen Punktmuster angeordnet sind, wobei das außerhalb der Zonen liegende Material von Schlitzen (6) frei ist.

6. Durchbrochenes Tarnmaterial nach Anspruch 5, dadurch gekennzeichnet, daß Schlitze (6) unterschiedlicher Größe in verschiedenen Zonen ausgebildet sind.

## Revendications

1. Matière de camouflage en forme d'un panneau coloré en camouflage, faite une couche renforçante (5) et d'une couche (1) d'une matière plastique stratifiée là-dessus, cette couche étant munie de trous s'interpénétrant, caractérisée par le fait que la couche d'une matière plastique a des tractions tendues, que lesdits trous consistent de découpures (6) détachées et arquées, pénétrant le panneau et formant des languettes qui sont, par l'action des tractions tendues, recourbées en dehors du plan du panneau vers le côté de la couche renforçante, à laquelle ladite matière plastique est disposé.

2. Matière trouée de camouflage selon la revendication 1, caractérisée par le fait que la couche renforçante est un produit tissu.

3. Matière trouée de camouflage selon l'une des revendications 1 ou 2, caractérisée par le fait que la couche (1) stratifiée est une feuille de polyéthylène dans laquelle des tractions tendues latentes sont provoquées pendant stratification sous chaleur.

4. Matière trouée de camouflage selon l'une quelconque des revendications précédentes, caractérisée par le fait que les découpures (6) sont des arcs de cercles d'un angle étant au-dessus de 180° et au-dessous de 270°.

5. Matière trouée de camouflage selon l'une quelconque des revendications précédentes, caractérisée par le fait que les découpures (6) sont faites dans des zones où elles sont disposées d'après une configuration à points, la matière au dehors des zones étant libre de découpures (6).

6. Matière trouée de camouflage selon la revendication 5, caractérisée par le fait que les découpures (6) de dimensions différentes sont faites dans des zones différentes.

FIG.1

FIG.2

FIG.3A

FIG.3B    FIG.3C

0 114 796

FIG.4A

FIG.4B

FIG.5

FIG.6